# EUROPEAN PATENT APPLICATION

(11) **EP 1 462 934 A1**
(43) Date of publication of application: **29.09.2004**
(21) Application number: 03090089.8
(22) Date of filing: 29.03.2003
(51) Int. Cl.: G06F 9/38

(54) **Method and apparatus for forwarding of results**

(71) Applicant: DEUTSCHE THOMSON-BRANDT GMBH, 78048 Villingen-Schwenningen (DE)
(72) Inventor: Wittenberg, Jens Peter, 30916 Isernhagen (DE); Niggemeier, Tim, 30880 Laatzen (DE)
(74) Representative: Hartnack, Wolfgang, Dipl.-Ing.

(57) **Abstract**

Processor instruction pipelines, which split the processing of individual instructions into several sub-stages and thus reduce the complexity of each stage while simultaneously increasing the clock speed, are typical features of RISC architectures. Operands required by the processing are read from a register file. Read-after-write access problems in the pipeline processing can be avoided by using a scoreboard that has an individual entry per address of the register file. Once an instruction enters the pipeline, a flag is set at the address of the destination address of this particular instruction. This flag signals that an instruction inside the pipeline wants to write its result to the respective register address. Hence the result is unavailable as long as the flag is set. It is cleared after the instruction process has successfully written the result into the register file. According to the invention, not only a single flag but the number of the pipeline stage, which currently carries the instruction that wants to write its result to a particular register file address, and the type of the respective instruction is stored in the corresponding scoreboard address for the particular instruction.

## Description

The invention relates to a method and to an apparatus for pipeline processing a chain of processing instructions, in particular to instruction scheduling and result forwarding logic of Reduced Instruction Set Computer (RISC) architectures.

### Background

Processor instruction pipelines, which split the processing of individual instructions into several (sub)stages and thus reduce the complexity of each stage while simultaneously increasing the clock speed, are typical features of RISC architectures. Such pipeline has a throughput of one instruction per cycle but a latency of several, or 'n', cycles per instruction. Such behaviour causes two implications relevant for the invention:
A) If a particular instruction in a sequential instruction stream produces a result that is required as operand for its immediate successor instruction or instructions, the processing of that succeeding instruction must wait (i.e. cannot enter the pipeline and thus generates idling pipeline stages) until the processing of the preceding instruction has generated its result in the corresponding pipeline stage. This kind of processing behaviour is denoted a read-after-write (RAW) pipeline hazard.
B) Operands are normally read from a so-called register file. However, after the processing results have been generated, it usually takes one or two additional cycles or stages until these results are actually stored in the register file. If processing units have different latencies (e.g. load operations can usually be processed faster than floating point operations) the delay between result generation and register file access increases, since all processing units must write back in the same stage to ensure precise interrupts. However, it is possible to read the results directly from subsequent pipeline stages by bypassing the register file once the results are actually generated. This type of processing is called 'result forwarding'.

RAW hazards can be avoided by using a 'scoreboard', which scoreboard typically features an individual entry per address of above register file. Once an instruction enters the pipeline, a flag is set at the address of the destination address (i.e. the result address) of this particular instruction. This flag signals that an instruction inside the pipeline wants to write its result to the respective register address. Hence the result is unavailable as long as the flag is set. It is cleared after the instruction process has successfully written the result into the register file. Any subsequent instruction that wants to enter the pipeline must check whether the flag is set for at least one of its source (i.e. operand) register addresses. The instruction is not allowed to enter the pipeline as long as these flags are not cleared. Therefore the scoreboard must be accessed every cycle.

E.g. in John L. Hennessy, David A. Patterson: "Computer Architecture: A Quantitative Approach", Morgan Kaufmann Publishers, ISBN: 1558605967, 3rd edition 15 May 2002, scoreboard architectures are described in detail.

### Invention

A disadvantage of known scoreboard solutions is that they use comparably costly and communication-intensive low-speed implementations of the forwarding and instruction scheduling logic. To implement such forwarding for each instruction intending to enter the pipeline, it must be checked for each operand, whether the operand address shows up as destination register on one of the pipeline stages following generation of results. Especially in case of processing units featuring differing delays, quite a few pipeline stages carry results suitable for forwarding. The known forwarding implementation requires concurrent communication with all of them.

According to the invention, not only a single flag but the number, or a corresponding codeword, of the pipeline stage, which currently carries the instruction that wants to write its result (or operand) to the particular register file address, and the type of the respective instruction (or operand, whereby this type can be a binary encoded code word) is stored in the corresponding scoreboard or register file address at the address of the destination address (i.e. result address) of the particular instruction (or operand). On one hand this feature requires slightly more storage space in the scoreboard, but on the other hand it simplifies RAW-hazard detection and in particular instruction forwarding. In other words, while known scoreboard architectures use a single bit for marking that a particular destination register address is being used by an instruction currently processed within the instruction pipeline, the invention employs a more complex data item designating the number of the current pipeline stage of the respective instruction and the type of that instruction. Advantageously, this specific information item can be used to calculate the necessary number of stall cycles to prevent a RAW hazard and/or the pipeline stage from which the result (or operand) can be forwarded. Otherwise the results (or operands) of all pipeline stages used for forwarding would need to be monitored and the issue logic would need to access the scoreboard each cycle for checking whether the respective flag is set. Logic and wiring required for such purposes would be costly and processing speed slow.

A problem to be solved by the invention is to facilitate increased processing speed in pipeline processing. This problem is solved by the method disclosed in claim 1. An apparatus that utilises this method is disclosed in claim 2.

Advantageously, costly and potentially low-speed bus snooping logic used for result forwarding in RISC architectures becomes obsolete. The efficiency of Read after Write (RAW) pipeline hazard detection is also increased.

In principle, the inventive method is suited for pipeline processing a chain of processing instructions, including the step:
- processing said instructions in a chain of succeeding pipeline stages, wherein partial or intermediate first pipeline processing operands or results are intermediately or permanently stored in a operand/result store, e.g. in a register file, for further access at the appropriate time instant or instants by one or more of said pipeline stages, and wherein partial or intermediate second pipeline processing operands or results available in one or more of said pipeline stages are accessed by one or more other ones of said pipeline stages at the appropriate time instant or instants without access to said operand/result store, and wherein a scoreboard is used in which information is stored about the presence or absence of specific ones of said partial or intermediate first pipeline processing operands or results required by subsequent pipeline processing,
wherein said scoreboard data are stored and updated about in which one or ones of said pipeline stages a currently required operand or result, or currently required operands or results, is - or are - located available for use in one or more other ones of said pipeline stages,
and wherein in said scoreboard data are stored and updated about the type of instruction that is related to said currently required operand or result, or currently required operands or results,
wherein said one or more other ones of said pipeline stages makes - or make - use of said data about location and said data about instruction type for accessing directly said currently required operand or result, or currently required operands or results, without need to access data stored in said operand/result store.

In principle the inventive apparatus is suited for pipeline processing a chain of processing instructions and includes:
- an operand/result store;
- a chain of succeeding pipeline stages, wherein said instructions are processed, whereby partial or intermediate first pipeline processing operands or results are intermediately or permanently stored in said operand/result store, e.g. in a register file, for further access at the appropriate time instant or instants by one or more of said pipeline stages,
   and wherein partial or intermediate second pipeline processing operands or results available in one or more of said pipeline stages are accessed by one or more other ones of said pipeline stages at the appropriate time instant or instants without access to said operand/result store;
- a scoreboard wherein data are stored and updated about in which one or ones of said pipeline stages a currently required operand or result, or currently required operands or results, is - or are - located available for use in one or more other ones of said pipeline stages,
   and wherein data are stored and updated about the type of instruction that is related to said currently required operand or result, or currently required operands or results,
   and wherein said one or more other ones of said pipeline stages use of said data about location and said data about instruction type for accessing directly said currently required operand or result, or currently required operands or results, without need to access data stored in said oper- and/result store.

Advantageous additional embodiments of the invention are disclosed in the respective dependent claims.

### Drawings

Exemplary embodiments of the invention are described with reference to the accompanying drawings, which show in:
- Fig. 1: register file/pipeline/scoreboard arrangement;
- Fig. 2: exemplary scoreboard of size n for the register file/pipeline/scoreboard arrangement of Fig. 1.

### Exemplary embodiments

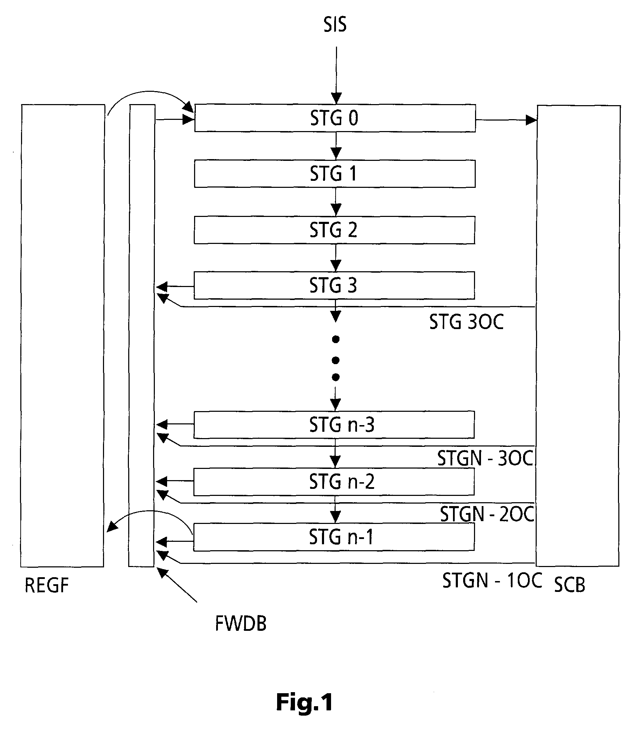

In Fig. 1, a (sequential) instruction stream enters the first stage STG0 of a chain of n pipeline processing stages STG0 to STGN-1. These stages each include e.g. a chain of registers and suitable processing means that perform the typical calculations and operations carried out in a CPU or microprocessor. E.g. stages STG3 to STGn-2 can forward intermediate or partial results to a forwarding bus FWDB, or to multiple forwarding buses. But, depending on the application, stages STG2 and/or STG1, may, or additional ones of the following stages STG4, STG5, ..., may not forward intermediate or partial results to bus FWDB. Stages STG0 to STGn-2 can forward intermediate pipeline processing results to the corresponding subsequent stage for further processing. The first stage STG0 can read intermediate or partial results from bus FWDB and/or from a register file REGF. The last stage STGn-1 writes the final results into register file REGF and eventually on bus FWDB. Stage STG0 writes the above-mentioned pipeline stage representative numbers and the above-mentioned instruction type representative numbers into scoreboard SCB.
The forwarding of the FWDB bus outputs from stages STG3 - STGn-1 to bus FWDB is controlled by respective stage output control signals STG30C to STGN-10C, which are provided by scoreboard SCB. Because of the general principles of pipeline processing, normally it makes no sense that stages STG1 and STG2 forward any intermediate or partial results to bus FWDB. But, depending on the application as mentioned above, any of stages STG2, STG1, STG4, STG5, ..., may in addition or may not be accompanied by respective stage output control signals STG20C, STG10C, STG40C, STG50C, ....

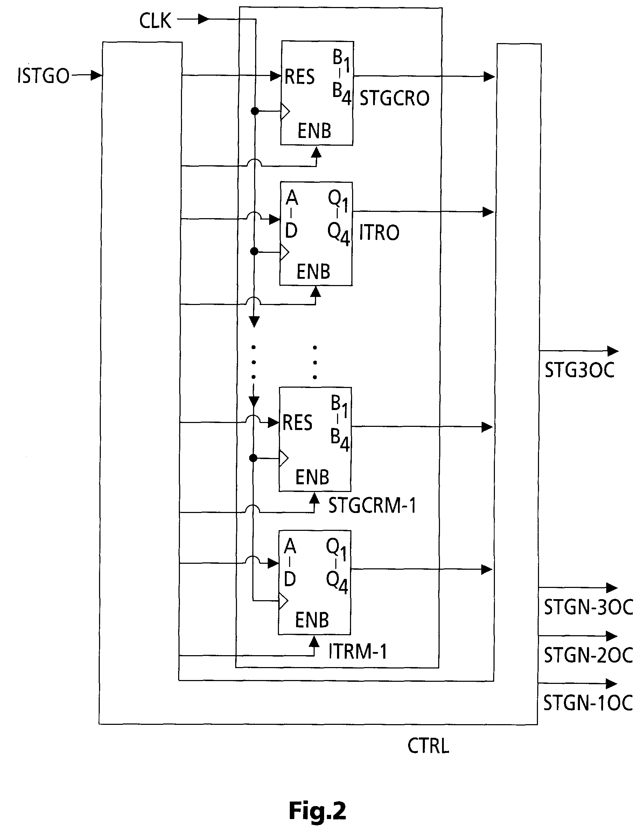

Fig. 2 shows a possible implementation of scoreboard SCB in more detail. The output signal ISTGO from stage STG0 is fed to a control stage CTRL. This control stage CTRL provides reset signals Res to a chain of stage counter registers STGCRO to STGCRM-1. Normally M is not equal N. Stage CTRL also provides type code signals consisting of e.g. bits A to D to a chain of instruction type registers ITRO to ITRM-1. Registers STGCRO to STGCRM-1 and ITRO to ITRM-1 are further controlled by a system or cycle clock CLK and by an enable signal ENB coming from CTRL. The output signals of registers STGCRO to STGCRM-1 and registers ITRO to ITRM-1 are fed to control stage CTRL.
E.g. a value '0' is written at the address of the destination register in the scoreboard SCB upon an instruction entering the pipeline (pipeline stage STGO). All stage counter entries related to destination register addresses of instructions that had previously entered the first pipeline stage are incremented every new cycle if the pipeline is not stalled, e.g. due to an RAW hazard. Therefore the current stage number is always kept up-to-date. When the corresponding instruction leaves the pipeline (pipeline stage STGn-1) the counter is incremented to value 'n'. An entry value 'n' is not incremented.
In other words, the current pipeline stage counting number is kept up-to-date, and upon a processed processing instruction leaving the last pipeline stage STGn-1 of the chain of pipeline stages, the pipeline stage counting number is set to an end value that is no more incremented.
This kind of processing can be carried out by using an individual incrementer within CTRL for each register address. Control stage CTRL provides the control signals STG30C to STGN-10C mentioned above in connection with Fig. 1.

Let x be the final number of the pipeline stage that generates the results, which number - depending on the instruction type - is also stored in the scoreboard SCB.
Let y be the scoreboard entry of an operand address of an instruction intended for entering the pipeline. Then, the number of required stall cycles can easily be calculated by just subtracting y from x. If the result is smaller than or equal to '0', no stall is required. If y does not equal n, forwarding is required. The pipeline stage actually forwarding the result is directly pointed to by y, i.e. signal OC-STGy.
Hence, no communication with the individual pipeline stages is required for forwarding. The scoreboard SCB is accessed by stage STG0 only. All communication is kept local, which saves global wiring (such wiring makes processing slow in modern sub-µ silicon technologies). Potentially costly and low-speed logic for communication is also saved.

For example, a SPARC V8 RISC processor can be used to implement the invention whereby an internal interface for the floating point unit can be redesigned according to the invention in order to achieve better performance. The floating point pipeline can have a length of eight stages, wherein the floating point operations can generate their results in the 6th stage and the load operation can take place already in the 2nd stage. Hence, especially the load instructions require extensive forwarding.

The implementation has been fully verified using VHDL-simulations on Register Transfer Level and by rapid proto-typing implementations on FPGA-boards.

The inventive pipeline processing is preferably performed electronically and/or automatically.

Instead of using hardware the invention can also be carried out by using corresponding software.

## Claims

1. Method for pipeline processing a chain of processing instructions (SIS), including the step:
- processing said instructions (SIS) in a chain of succeeding pipeline stages (STGO - STGn-1), wherein partial or intermediate first pipeline processing operands or results are intermediately or permanently stored in a oper- and/result store (REGF), e.g. in a register file, for further access at the appropriate time instant or instants by one or more of said pipeline stages (STGO - STGn-1),
and wherein partial or intermediate second pipeline processing operands or results available in one or more of said pipeline stages are accessed by one or more other ones of said pipeline stages at the appropriate time instant or instants without access to said operand/result store (REGF),
and wherein a scoreboard (SCB) is used in which information is stored about the presence or absence of specific ones of said partial or intermediate first pipeline processing operands or results required by subsequent pipeline processing,
**characterised in that** in said scoreboard (SCB), data are stored and updated about in which one or ones of said pipeline stages a currently required operand or result, or currently required operands or results, is - or are - located available for use in one or more other ones of said pipeline stages,
and **in that** in said scoreboard (SCB), data are stored and updated about the type of instruction that is related to said currently required operand or result, or currently required operands or results,
wherein said one or more other ones of said pipeline stages makes - or make - use of said data about location and said data about instruction type for accessing directly said currently required operand or result, or currently required operands or results, without need to access data stored in said operand/result store.

2. Apparatus for pipeline processing a chain of processing instructions (SIS), and including:
- an operand/result store (REGF);
- a chain of succeeding pipeline stages (STGO - STGn-1),
wherein said instructions (SIS) are processed, whereby partial or intermediate first pipeline processing operands or results are intermediately or permanently stored in said operand/result store (REGF), e.g. in a register file, for further access at the appropriate time instant or instants by one or more of said pipeline stages (STGO - STGn-1),
and wherein partial or intermediate second pipeline processing operands or results available in one or more of said pipeline stages are accessed by one or more other ones of said pipeline stages at the appropriate time instant or instants without access to said operand/result store (REGF) ;
- a scoreboard (SCB) wherein data are stored and updated about in which one or ones of said pipeline stages a currently required operand or result, or currently required operands or results, is - or are - located available for use in one or more other ones of said pipeline stages, and wherein data are stored and updated about the type of instruction that is related to said currently required operand or result, or currently required operands or results, and wherein said one or more other ones of said pipeline stages use of said data about location and said data about instruction type for accessing directly said currently required operand or result, or currently required operands or results, without need to access data stored in said operand/result store.

3. Method or apparatus according to claim 1 or 2, wherein said scoreboard (SCB) contains an individual incrementer for each address of a register in said operand/result store.

4. Method or apparatus according to claim 3, wherein the first one (STGO) of said pipeline stages writes a zero value at the address of a destination register in said scoreboard (SCB) upon a processing instruction entering said first pipeline stage (STGO), and all stage counters related to processing instructions that had previously entered said first pipeline stage are incremented every new cycle if the corresponding pipeline stages are not stalled, such that the current pipeline stage counting number is kept up-to-date, and wherein, upon a processed processing instruction leaving the last pipeline stage (STGn-1) of said chain of pipeline stages, said pipeline stage counting number is set to an end value (n) that is no more incremented.

5. Method or apparatus according to one of claims 1 to 4, wherein said chain of pipeline stages, except said first (STGO) and the last (STGn-1) pipeline stage, feed partial or intermediate second pipeline processing operands or results available in one or more of said pipeline stages to a common bus (FWDB) from which said partial or intermediate second pipeline processing operands or results can be accessed by one or more other ones of said pipeline stages at the appropriate time instant or instants without access to said operand/result store (REGF).
